# EUROPEAN PATENT APPLICATION

(11) **EP 1 993 245 A1**
(43) Date of publication of application: **19.11.2008**
(21) Application number: 07721286.8
(22) Date of filing: 28.05.2007
(51) Int. Cl.: H04L 12/58

(54) **A SYSTEM AND METHOD FOR REALIZING MESSAGE SERVICE**

(30) Priority: 26.05.2006 CN 200610080976
(71) Applicant: Huawei Technologies Co., Ltd., Shenzhen, Guangdong Province 518129 (CN)
(72) Inventor: JIANG, Lingli, Shenzhen Guangdong Province 518129 (CN); WANG, Chunyong, Shenzhen Guangdong Province 518129 (CN); CHEN, Xiangrong, Shenzhen Guangdong Province 518129 (CN)
(74) Representative: Pfenning, Meinig & Partner GbR
(86) International application number: PCT/CN2007/001713
(87) International publication number: WO 2007/143903

(57) **Abstract**

A system and method for implementing message services. The system includes a configuration information storage unit, a service access system and a core processing unit. The configuration information storage unit stores access configuration information of information providers that provide different message services and stores routing configuration information for message forwarding; the service access unit is adapted to (1) determine whether to allow information providers of different message services to access the system according to the access configuration information stored in the configuration information storage unit, (2) forward messages exchanged between users and information providers that are allowed to access the system to the core processing unit, and (3) forward messages forwarded by the core processing unit whose receiver information is identified to appropriate users and information providers; and the core processing unit is adapted to identify receiver information of messages sent from the service access unit according to the routing configuration information stored in the configuration information storage unit, and forward messages whose receiver information is identified to the service access unit. The technical solution provided by the present invention helps simplify the configuration and maintenance of data and thus the access of information providers is quicker.

## Description

### Field of the Invention

The present invention relates to network communication technologies, and in particular, to a system and method for implementing message services.

### Background of the Invention

At present, short message, multimedia message and unstructured supplementary service data (USSD) services are popular. More and more content providers are providing contents for these services and enterprises also gradually use these means for their daily office work, business processing and service provision.

The following describes access modes of short message, multimedia message and USSD services with reference to accompanying drawings.

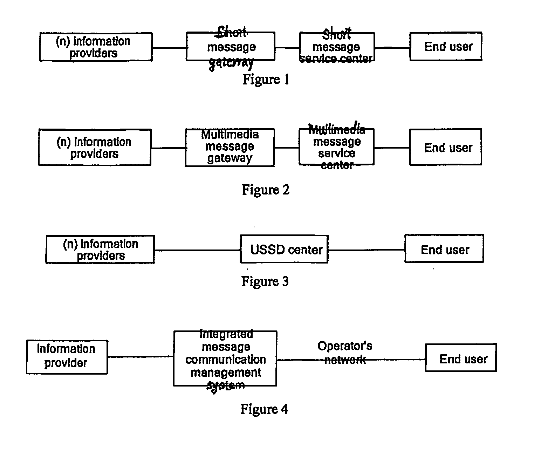

The networking of the short message service is shown in Figure 1.

In Figure 1, an information provider, such as a service provider, a content provider, or an enterprise, accesses a short message gateway directly to access the short message service. Therefore, every information provider should be configured on related devices including the short message gateway at the operator side. In addition, because service management equipments are usually independent from each other, the information provider also has to register and apply with the service management equipment. However, present development of service management equipments still lags behind, and as a result, capability of managing information providers is weak.

The networking of the multimedia message service is shown in Figure 2.

In Figure 2, the information provider, such as a service provider, a content provider, or an enterprise, accesses a multimedia message service center or a multimedia message gateway directly to access the multimedia message service. Therefore, every information provider should be configured on related devices including the multimedia message gateway at the operator side. In addition, the present development of service management equipments still lags behind, and as a result, the capability of managing information providers is weak.

The USSD service networking is shown in Figure 3.

In Figure 3, the information provider, such as a service provider, a content provider, or an enterprise, accesses a USSD center directly to access the USSD service. Therefore, every information provider should be configured on related devices including the USSD center at the operator side. In addition, the present development of service management equipments still lags behind and as a result, the capability of managing information providers is weak.

As can be seen from the above description of the access modes of short message, multimedia message and USSD services that, if one information provider provides short message, multimedia message, and USSD services simultaneously, the operator side has to provide different message services for the information provider via different message service systems and configure a large amount of data on different network devices (such as the short message gateway, multimedia message gateway and the USSD center). A large part of the data is the same and is stored repeatedly on different network devices. When there are more information providers, the workload of configuration, maintenance and management for the data on the network devices will grow rapidly, which is disadvantageous to the quick access of information providers. In addition, the information provider must transfer short message, multimedia message and USSD services to corresponding network devices so that the service implementation procedures are complex.

### Summary of the Invention

Embodiments of the present invention provide a system and method for implementing message services so as to simplify data configuration and maintenance of message services and achieve quicker access of information providers.
An embodiment of the present invention provides a system for implementing message services, including:a configuration information storage unit, a service access unit and a core processing unit, where: configuration information storage unit, adapted to store access configuration information of information providers that provide different message services and store routing configuration information for message forwarding; a service access unit, adapted to determine whether to are allowed information providers of different message services to access the system according to the access configuration information stored in the configuration information storage unit, forward messages exchanged between users and information providers that are allowed to access the system to a core processing unit, and forward messages forwarded by the core processing unit, to corresponding users or information providers; and
a core processing unit, adapted to identify receiver information of messages from the service access unit, according to the routing configuration information stored in the configuration information storage unit, and forward messages whose receiver information is identified to the service access unit.

An embodiment of the present invention further provides a method for implementing message services, including:
determining whether to allow information providers that provide different message services to access, according to stored access configuration information related to information providers that provide different message services; identifying receiver information of messages exchanged between users and information providers that are allowed to access the system according to stored routing configuration information related to different message services; and forwarding messages, whose receiver information is identified, to corresponding users or information providers.

A system configuration management unit provided by an embodiment of the present invention configures all kinds of configuration information related to different message services in a centralized manner in a configuration storage unit, which facilitates centralized management and maintenance of configuration information related to different message services and avoids the need to configure data related to one information provider on different network devices for provision of different message services; information providers that provide different message services can access a message processing system quickly based on the centralized access configuration information, and thus the access of information providers is quicker.

### Brief Description of the Drawings

Figure 1 shows a networking scheme for implementing the short message service in the prior art;

Figure 2 shows a networking scheme for implementing the multimedia message service in the prior art;

Figure 3 shows a networking scheme for implementing USSD service in the prior art;

Figure 4 shows a networking scheme for implementing message services according to an embodiment of the present invention;

Figure 5 shows the structure of an integrated message communication management system according to an embodiment of the present invention;

Figure 6 shows a system for implementing message services according to an embodiment of the present invention; and

Figure 7 shows a system for implementing message services according to another embodiment of the invention.

### Detailed Description of the Invention

An embodiment of the present invention provides a method for implementing message services so that an operator can use one message service system to process different message services when one information provider simultaneously provides short message, multimedia message and USSD message services. The method also enables centralized data configuration, management and maintenance for the integrated message service system to avoid duplicate data configuration, maintenance and management for different message services. With the method, when there are more information providers, the data configuration, maintenance and management workloads for different message services will not grow rapidly. In addition, information providers that provide different message services can access a message processing system quickly based on the centralized access configuration information, and thus the access of information providers is quicker. The following describes the system and method for implementing message services provided by embodiments of the present invention in detail with reference to the accompanying drawings. The system for implementing message services provided by an embodiment of the present invention is an integrated message communication management system, of which the networking scheme is shown in Figure 4. In Figure 4, an information provider provides short message, multimedia message and USSD message services via an integrated message communication management system provided by an embodiment of the present invention and the integrated message communication management system provides message services via existing network of an operator.

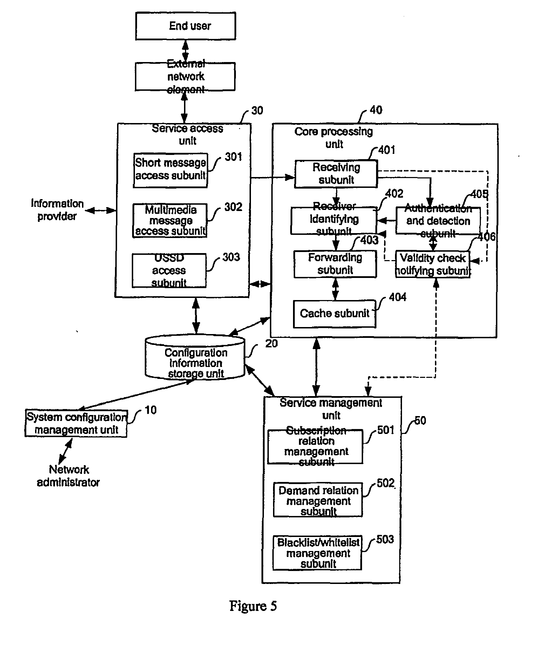

Figure 5 shows the internal structure of an integrated message communication management system according to an embodiment of the present invention.

In Figure 5, the integrated message communication management system according to an embodiment of the present invention includes: a system configuration management unit 10, a configuration information storage unit 20, a service access unit 30, a core processing unit 40 and a service management unit 50. The configuration information storage unit 20 may be represented in various forms like a database or a file. The function of each unit is as follows:

The system configuration management unit 10 is adapted to receive uniform configuration information for different message services sent by a network administrator. The configuration information received by the system configuration management unit 10 may be input from an external source. The system configuration management unit 10 also transfers the received uniform configuration information for different message services to the configuration information storage unit 20 for storage. The network administrator may also uniformly manage and maintain the configuration information stored in the configuration information storage unit 20 via the system configuration management unit 10. For example, the network administrator may, via the system configuration management unit 10, view the configuration information stored in the configuration information storage unit 20, modify configuration information stored in the configuration information storage unit 20, delete configuration information stored in the configuration information storage unit 20, or add new configuration information.

If the service access unit 30, the core processing unit 40 and the service management unit 50 synchronize their local storage respectively with related configuration information stored in the configuration information storage unit 20, after an external source modifies configuration information stored in the configuration information storage unit 20 via the system configuration management unit 10, the system configuration management unit 10 may further transfer the modified configuration information to the service access unit 30, the core processing unit 40 and the service management unit 50 to notify these units to modify the related configuration information in their local storage according to the received configuration information. Or, after an external source modifies configuration information stored in the configuration information storage unit 20 via the system configuration management unit 10, the system configuration management unit 10 may notify the service access unit 30, the core processing unit 40 and the service management unit 50 that the configuration information is modified. After receiving the notification, these units may synchronize their local storage with the modified configuration information in the configuration information storage unit 20. For example, after an external source modifies configuration information stored in the configuration information storage unit 20 via the system configuration management unit 10, the system configuration management unit 10 notifies the service access unit 30, and upon reception of the notification, the service access unit 30 obtains the modified configuration information from the configuration information storage unit 20 and modifies the configuration information in its local storage according to the modified configuration information obtained from the configuration information storage unit 20.

It is understood that embodiments of the present invention may also adopt some existing methods for the system configuration management unit 10 to notify other units to obtain modified configuration information after configuration information stored in the configuration information storage unit 20 is modified. For example, other units may obtain modified configuration information from the configuration information storage unit 20 on a timed basis.

The configuration information stored in the configuration information storage unit 20 includes access configuration information related to information providers that provide at least one message service and also includes routing configuration information, control configuration information and message validity check configuration information related to different message services. In the prior arts, to implement message services, the network side should configure message service processing data of information providers respectively on different network devices such as the short message gateway, the multimedia message gateway and the USSD center. Compared with the technical solution of the prior arts, an embodiment of the present invention provides a uniform way to enter the configuration information of message service processing data for different types of message services and a uniform procedure to configure message service processing data. Thus, the embodiment of the present invention avoids the storage of the same message service processing data simultaneously on different network devices and avoids the incompleteness and inconsistency due to the lack of a uniform way to create message service processing data. For an operator, it is only necessary to enter the message service processing data of information providers at one time. The message service processing data entered by the operator is uniform, which helps the operator query, maintain and monitor services of information providers.
The foregoing configuration information storage unit 20 may be a total physical storage space that stores the uniform configuration information related to different message services. Alternatively, the configuration information storage unit 20 may also be several distributed storage subspaces. For example, it may include several storage subspaces distributed in the service access unit 20, the core processing unit 40 and the service management unit 50, where the storage subspace distributed in the service access unit 30 is adapted to store uniform access configuration information of information providers that provide different message services; the storage subspace distributed in the core processing unit 40 is adapted to store routing configuration information and control configuration information related to different message services; and the storage subspace distributed in the service management unit 50 is adapted to store the validity check configuration information related to different message services.

The service access unit 30 is adapted to access information providers that provide different message services and forward different messages. In other words, the service access unit 30 performs access configuration for information providers according to the access configuration information stored in the configuration information storage unit 20, determines whether to allow information providers that provide at least one message service to access the system according to the access configuration, decodes different types of messages sent from information providers that are allowed to access the system, transfers the decoded different types of messages to the core processing unit 40 for processing, encodes the messages carrying receiver information sent from the core processing unit 40, and forwards the encoded messages to external network elements (different types of message service centers or message gateways) according to the receiver information. The messages are forwarded by the external network elements to corresponding users.

On the other hand, the service access unit 30 also needs to decode different types of messages sent from users and transfer the decoded different types of messages to the core processing unit 40, and later encode the messages carrying receiver information sent from the core processing unit 40 and forward the encoded messages to corresponding information providers according to the receiver information.

Further, the service access unit 30 may include specific functional components according to different service types. For example, the service access unit 30 may include a short message access subunit 301, a multimedia message access subunit 302 and a USSD access subunit 303.

The short message access subunit 301 is adapted to control access of information providers that provide the short message service and forward short messages. In other words, the short message access subunit 301 performs access configuration for information providers that provide the short message service according to the access configuration information stored in the configuration information storage unit 20, decodes short messages sent from information providers that are allowed to access the system, transfers the decoded short messages to the core processing unit 40, encodes the short messages carrying receiver information sent from the core processing unit 40, and forwards the encoded short messages to an external network element (short message service center or short message gateway) according to the receiver information. The short messages are forwarded by the external network element to corresponding users. On the other hand, the short message access subunit 301 also needs to decode short messages sent from users and transfer the decoded short messages to the core processing unit 40, and later encode the short messages carrying receiver information sent from the core processing unit 40 and forward the encoded short messages to corresponding information providers that provide the short message service.

The multimedia message access subunit 302 is adapted to control access of information providers that provide the multimedia message service and forward multimedia messages. In other words, the multimedia message access subunit 302 performs access configuration for information providers that provide the multimedia message service according to the access configuration information stored in the configuration information storage unit 20, decodes multimedia messages sent from information providers that are allowed to access the system, transfers the decoded multimedia messages to the core processing unit 40, encodes the multimedia messages carrying receiver information sent from the core processing unit 40, and forwards the encoded multimedia messages to an external network element (multimedia message service center or multimedia message gateway) according to the receiver information. The multimedia messages are forwarded by the external network element to corresponding users. On the other hand, the multimedia message access subunit 302 also needs to decode multimedia messages sent from users and transfer the decoded multimedia messages to the core processing unit 40, and later encode the multimedia messages carrying receiver information sent from the core processing unit 40 and forward the encoded multimedia messages to corresponding information providers that provide the multimedia message service.

The USSD access subunit 303 is adapted to control access of information providers that provide the USSD message service and forward USSD messages. In other words, the USSD access subunit 303 performs access configuration for information providers that provide the USSD message service according to the access configuration information stored in the configuration information storage unit 20, decodes USSD messages sent from information providers that are allowed to access the system, transfers the decoded USSD messages to the core processing unit 40, encodes the USSD messages carrying receiver information sent from the core processing unit 40, and forwards the encoded USSD messages to an external network element (USSD center) according to the receiver information. The USSD messages are forwarded by the external network element to corresponding users. On the other hand, the USSD access subunit 303 also needs to decode USSD messages sent from users and transfer the decoded USSD messages to the core processing unit 40, and later encode the USSD messages carrying receiver information sent from the core processing unit 40 and forward the encoded USSD messages to corresponding information providers that provide the USSD message service.

The core processing unit 40 includes: a receiving subunit 401, adapted to receive different types of messages forwarded by the service access unit 30; a receiver identifying subunit 402, adapted to identify receiver information of messages received by the receiving subunit 401 according to routing configuration information related to different message services stored in the configuration information storage unit 20, that is, to complete the addressing of different messages; and a forwarding subunit 403, adapted to forward messages, whose receiver information is identified by the receiver identifying subunit 402, to the service access unit 30.

The core processing unit 40 may further include a cache subunit 404, adapted to cache messages that the forwarding subunit 403 fails to forward. Later the forwarding subunit 403 may extract cached messages from the cache subunit 404 and re-forward the extracted messages to the service access unit 30. This increases the success rate of message forwarding.

The core processing unit 40 may further include an authentication and detection subunit 405, adapted to perform basic authentication and detection on different messages received by the receiving subunit 401 according to control configuration information related to different message services stored in the configuration information storage unit 20, and send the authentication and detection result to the receiver identifying subunit 402. The receiver identifying subunit 402 identifies receiver information of messages received by the receiving subunit 401 only when the authentication and detection are successful.

The core processing unit 40 may further include a validity check notifying subunit 406, adapted to notify the service management unit 50 to check the validity of different types of messages received by the receiving subunit 401 and receive the check result returned by the service management unit 50, forward the received check result to the receiver identifying subunit 402. The receiver identifying subunit 402 identifies receiver information of messages received by the receiving subunit 401 only when the validity check is successful.

The validity check notifying subunit 406 notifies the service management unit 50 to check the validity of received messages by forwarding the messages received by the receiving subunit 401 to the service management unit 50, or the validity check notifying subunit 406 notifies the service management unit 50 to check the validity of messages received by the receiving subunit 401 based on related received information by forwarding related information included in the messages received by the receiving subunit 401 to the service management unit 50.

The system provided by an embodiment of the present invention may choose either the procedure performed by the authentication and detection subunit 405 or the procedure performed by the validity check notifying subunit 406, or choose both procedures for better validity and security of forwarded messages. When both procedures are selected, the authentication and detection subunit 405 may first perform authentication and detection on messages received by the receiving subunit 401 and the validity check notifying unit 406 notifies the service management unit 50 to check the validity of the messages received by the receiving subunit 401 only when the authentication is successful; or the validity check notifying subunit 406 may first notify the service management unit 50 to check the validity of messages received by the receiving subunit 401 and the authentication and detection subunit 405 performs authentication and detection on the messages received by the receiving subunit 401 only when the validity check is successful. Despite the order of the two procedures, the receiver identifying subunit 402 does not query receiver information of the received messages until both authentication and detection and validity check of the messages received by the receiving subunit 401 are successful and then the forwarding subunit 403 forwards messages, whose receiver information is identified, to the service access unit 30. In other words, when the authentication and detection and/or validity check of a message received by the receiving subunit 401 are not successful, the whole processing of the message will stop.

In addition to the above functions, the core processing unit 40 also performs flow control, right control, priority control, and allowed/forbidden sending time control on messages received by the receiving subunit 401. In other words, the core processing unit 40 schedules the received messages uniformly before forwarding them to the service access unit 30.

The service management unit 50 is adapted to check the validity of messages received by the core processing unit 40 according to the validity check configuration information stored in the configuration information storage unit 20 upon reception of a validity check request sent from the core processing unit 40.

The service management unit 50 authenticates the service relation of messages received by the core processing unit 40 according to the validity check configuration information stored in the configuration information storage unit 20 and allows the core processing unit 40 to forward the received messages to the service access unit 30 only when the service relation authentication is successful. When the service relation authentication fails, the service management unit 50 forbids the core processing unit 40 to forward the received messages to the service access unit 30. The service relation authentication is to perform service relation management on service messages, for example, subscription relation management, demand relation management, and blacklist/whitelist management. According to the type of service relation management, the service management unit 50 may include a subscription relation management subunit 501, a demand relation management subunit 502, and a blacklist/whitelist management subunit 503.

The subscription relation management subunit 501 authenticates the subscription relation of messages received by the core processing unit 40 according to subscription relation configuration information included in the validity check configuration information stored in the configuration information storage unit 20 and allows the core processing unit 40 to forward the received messages to the service access unit 30 only when the subscription relation authentication is successful. When the subscription relation authentication fails, the subscription relation management subunit 501 forbids the core processing unit 40 to forward the received messages to the service access unit 30.

On the one hand, the subscription relation management subunit 501 may download the subscription relation configuration information included in the validity check configuration information stored in the configuration information storage unit 20 to its local storage in advance, so the subscription relation management subunit 501 may authenticate the subscription relation of a service message received by the core processing unit 40 according to the subscription relation configuration information in the local storage. In this mode, when the subscription relation configuration information stored in the configuration information storage unit 20 changes, the subscription relation management subunit 501 may update the subscription relation configuration information in the local storage via timed active downloading, or downloading according to a notification of the system configuration management unit 10, or receive the changed subscription relation configuration information transferred by the system configuration management unit 10 directly.

On the other hand, the subscription relation management subunit 501 may look up subscription relation configuration information included in the related validity check configuration information in the configuration information storage unit 20 every time when the subscription relation management subunit 501 authenticates the subscription relation of a service message received by the core processing unit 40.

The demand relation management subunit 502 authenticates the demand relation of messages received by the core processing unit 40 according to demand relation configuration information included in the validity check configuration information stored in the configuration information storage unit 20 and allows the core processing unit 40 to forward the received messages to the service access unit 30 only when the demand relation authentication is successful. When the demand relation authentication fails, the demand relation management subunit 502 forbids the core processing unit 40 to forward the received messages to the service access unit 30.

On the one hand, the demand relation management subunit 502 may download the demand relation configuration information included in the validity check configuration information stored in the configuration information storage unit 20 to its local storage in advance, so the demand relation management subunit 502 may authenticate the demand relation of a service message received by the core processing unit 40 according to the demand relation configuration information in the local storage. In this mode, when the demand relation configuration information stored in the configuration information storage unit 20 changes, the demand relation management subunit 502 may update the demand relation configuration information in the local storage via timed active downloading, or downloading according to a notification of the system configuration management unit 10, or receive the changed demand relation configuration information transferred by the system configuration management unit 10 directly.

On the other hand, the demand relation management subunit 502 may look up demand relation configuration information included in the related validity check configuration information in the configuration information storage unit 20 every time when the demand relation management subunit 501 authenticates the demand relation of a service message received by the core processing unit 40.

The blacklist/whitelist management subunit 503 authenticates the message sending right and/or receiving right for messages received by the core processing unit 40 according to blacklist/whitelist configuration information included in the validity check configuration information stored in the configuration information storage unit 20 allows the core processing unit 40 to forward the received messages to the service access unit 30 only when the message receiving right and/or receiving right authentication is successful. When the message receiving right and/or receiving right authentication fails, the blacklist/whitelist management subunit 503 forbids the core processing unit 40 to forward the received messages to the service access unit 30. The blacklist/whitelist may be information of users that are allowed to use message services or information of users that are forbidden to use message services.

On the one hand, the blacklist/whitelist management subunit 503 may download the blacklist/whitelist configuration information included in the validity check configuration information stored in the configuration information storage unit 20 to its local storage in advance, so the blacklist/whitelist management subunit 503 may authenticate the sending right and/or receiving right for a service message received by the core processing unit 40 according to the blacklist/whitelist configuration information in the local storage. In this mode, when the blacklist/whitelist configuration information stored in the configuration information storage unit 20 changes, the blacklist/whitelist management subunit 503 may update the blacklist/whitelist configuration information in the local storage via timed active downloading, or downloading according to a notification of the system configuration management unit 10, or receive the changed blacklist/whitelist configuration information transferred by the system configuration management unit 10 directly.

On the other hand, the blacklist/whitelist management subunit 503 may look up blacklist/whitelist configuration information included in the related validity check configuration information in the configuration information storage unit 20 every time when the blacklist/whitelist management subunit 501 authenticates the sending right and/or receiving right for a service message received by the core processing unit 40.

To sum up, with the service relation management of the service management unit 50, when an information provider provides information service for an end user, the integrated message communication management system disclosed in an embodiment of the present invention may check the validity of service messages provided by the information provider so that only service messages that succeed in the validity check are forwarded to the end user via the operator network.

According to an embodiment of the present invention, the integrated message communication management system processes the access of service messages provided by an information provider in the following procedure:

The information provider sends an access request to the operator and the operator approves and confirms the request of the information provider. After the request is approved by the operator, the system configuration management unit 10 of the integrated message communication management system stores the access configuration information of the information provider in the configuration information storage unit 20. The service access unit 30 controls the access of information providers that provide different message services according to the access configuration information stored in the configuration information storage unit 20.

In prior message service implementation procedures, the network side needs to configure data of different message services on different network devices (such as a short message gateway, a multimedia message gateway, and a USSD center). Compared with prior arts, the technical solution provided by an embodiment of the present invention provides uniform configuration data and a uniform access configuration procedure for information providers that provide different message services. For an information provider, it is unnecessary to know the configuration information of different message services but only necessary to know the configuration information of one type of message service.

In an embodiment of the present invention, the integrated message communication management system processes service messages in the following procedure:

An information provider sends a message service activation request to the operator and the operator approves and confirms the request of the information provider. After the request is approved by the operator, the system configuration management unit 10 of the integrated message communication management system stores the control configuration information and validity check configuration information of the information provider in the configuration information storage unit 20. The core processing unit 40 and the service management unit 50 determine whether to allow forwarding of service messages according to the control configuration information and validity check configuration information of the information provider in the configuration information storage unit 20.

In prior arts, to implement message services, the network side has to configure message service processing data of information providers respectively on different network devices such as the short message gateway, the multimedia message gateway and the USSD center. Compared with the prior arts, the technical solution provided by an embodiment of the present invention configures message service processing data for different types of message services in a uniform manner and provides a uniform message service processing procedure. Thus, the embodiment of the present invention avoids the storage of the same message service processing data simultaneously on different network devices and therefore avoids the incompleteness and inconsistency due to the lack of a uniform way to create message service processing data. For an operator, the message service processing data entered by the operator is uniform, which helps the operator query, maintain and monitor services of information providers.

An information provider needs only to access the integrated message communication management system and the integrated message communication management system can then provide end users with various forms of message services, such as short message service, multimedia message service and USSD service. In prior arts, if an information provider needs to provide different message services, the information provider has to access different network devices. The technical solution provided by an embodiment of the present invention avoids the replicated configuration of data and complex access procedure and allows the operator to maintain configuration data in a uniform manner.

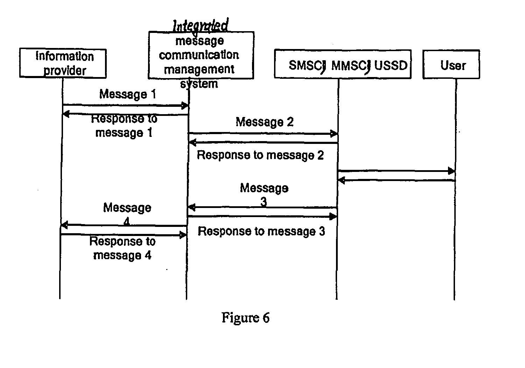

According to an embodiment of the present invention, the basic message delivery procedure of the integrated message communication management system is shown in Figure 6.

In Figure 6, after an information provider accesses the integrated message communication management system, the information provider sends a message 1 to the system. Different types of messages, such as a short message, a multimedia message or a USSD message, are transferred over different message protocols. The integrated message communication management system checks the validity and authenticates the message service for the received message 1 and afterwards forwards a response to the message 1 to the information provider. The response to the message 1 may indicate message service authentication failure or message service authentication success. After the integrated message communication management system determines that the message validity check and message service authentication are successful, the system sends a message 2 to an corresponding message service center, for example, a short message to a short message service center (SMSC), a multimedia message to a multimedia message service center (MMSC), or a USSD message to a USSD center. The message service center, upon reception of the message 2 sent from the integrated message communication management system, may send a response to the message 2 to the integrated message communication management system. Then the message service center interacts with the user terminal to send the message to the user terminal. Upon success or failure of message delivery, the message service center interacts with the integrated message communication management system to notify the integrated message communication management system of the message delivery result (the messages exchanged are the message 3 and the message 3 response shown in Figure 6). Upon reception of the message delivery result returned by the message service center, the integrated message communication management system interacts with the information provider to notify the information provider of the message delivery result (the messages exchanged are the message 4 and the message 4 response shown in Figure 6).

The interaction between the integrated message communication management system and the message service center, the interaction between the integrated message communication management system and the information provider, and the interaction between the message service center and the user terminal may be primarily the same as prior message interaction procedures.

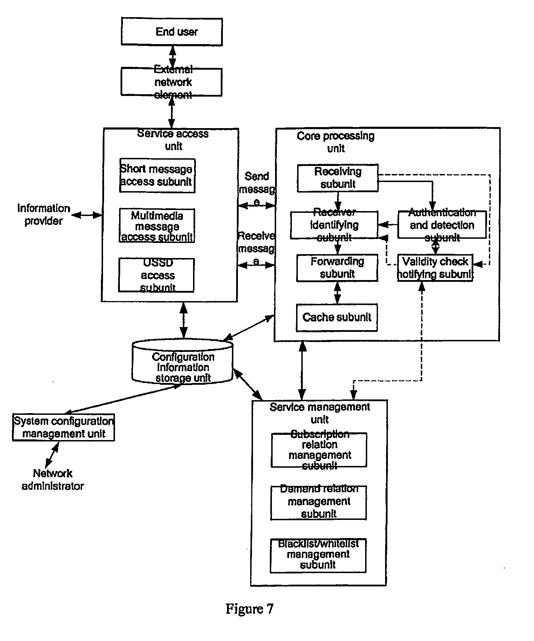

In another embodiment of the present invention, an internal message processing procedure inside the integrated message communication management system is shown in Figure 7.

In Figure 7, after the service access unit in the integrated message communication management system determines that the information provider is allowed to access the system according to the access configuration information stored in the configuration information storage unit, the service access unit receives a message 1 sent by the information provider and forwards the message 1 to the core processing unit. The core processing unit authenticates the received message according to the control configuration information stored in the configuration information storage unit and, after the authentication succeeds, identifies receiver information of the received message according to the routing configuration information stored in the configuration information storage unit. Because the service access unit may receive different types of messages, different types of messages need to be transferred to the core processing unit by different processing subunits of the service access unit. For example, a short message is transferred to the core processing unit by a short message access subunit; a multimedia message is transferred to the core processing unit by a multimedia message access subunit; and a USSD message is transferred to the core processing unit by a USSD access subunit.

After the core processing unit receives the message sent by the service access unit, a forwarding subunit of the core processing unit returns a message 1 response to the information provider via the service access unit, indicating that the core processing unit has received the message provided by the information provider. Then an authentication and detection subunit of the core processing unit performs basic authentication and detection on the message provided by the information provider. Upon success of the authentication and detection, a validity check notifying subunit of the core processing unit sends the message to the service management unit for a validity check. The service management unit performs subscription authentication and rating authentication on the received message and if the subscription relation authentication and rating authentication are successful, sends the message back to the core processing unit.

The forwarding subunit in the core processing unit forwards messages that succeed in authentication and validity check with receiver information identified to the service access unit. The core processing unit also schedules received messages uniformly and controls the transfer of messages according to service related rules such as flow control, right control, priority control and allowed/forbidden sending time control. The forwarding subunit in the core processing unit sends the successfully authenticated message 2 that it receives to the corresponding message service center, such as a short message service center, a multimedia message service center or a USSD center, via the service access unit according to the message type, and waits for the notification message of the service access unit. The cache subunit in the core processing unit caches messages that the forwarding subunit fails to forward and may also retransmit messages cached in the cache subunit.

When the authentication of a message received by the core processing unit fails, the core processing unit sends a message 4 to the information provider via the service access unit directly to notify the information provider of the authentication failure.

The message service center, such as a short message service center, a multimedia message service center or a USSD center, sends messages forwarded by the service access unit to user terminals via a mobile network.

The message service center, such as a short message service center, a multimedia message service center or a USSD center, sends a message 3 to the integrated message communication management system according to the reception status of the user terminal, to notify the integrated message communication management system of the message delivery result.

Upon reception of the message 3 sent by the message service center, the service access unit in the integrated message communication management system sends a message 3 acknowledgement to the message service center, that is, to send a response to the message 3 to the message service center. Then, the service access unit forwards a message 4 to the information provider according to the received message 3, to notify the information provider of the final message delivery result.

Taking the short message service as an example, the following describes the method for implementing message services according to an embodiment of the present invention.

It is supposed that an information provider wants to deliver a short message to a user. The information provider first sends the short message to the integrated message communication management system it accesses. Upon reception of the short message, the short message access subunit in the integrated message communication management system decodes the short message and sends the decoded short message to the core processing unit for basic authentication and detection. The core processing unit in the integrated message communication management system performs various detections including validity detection and various control detections and sends the short message to the service management unit for a validity check after the detections are successful. The service management unit in the integrated message communication management system performs blacklist/whitelist authentication and subscription relation authentication on the short message in need of authentication and sends the authentication result to the core processing unit after the authentication succeeds. The core processing unit in the integrated message communication management system identifies receiver information of the short message successfully authenticated by the service management unit according to routing configuration information stored in the configuration information storage unit and sends the short message to the short message access subunit after the receiver information of the short message is identified. The short message access subunit encodes the short message in need of delivery and sends the encoded short message to the corresponding short message service center according to the receiver information and finally the short message service center forwards the short message to the user terminal.

The integrated message communication management system provided by embodiments of the present invention may uniformly manage and monitor messages of multiple access services such as short message access service, multimedia message access service, and USSD message access service. The integrated message communication management system may also maintain, trace and analyze the messages uniformly. In prior arts, a standalone monitoring system is needed to monitor messages, and different types of messages cannot be monitored uniformly. The maintenance and trace of different types of messages must be carried out in different systems. This is not good for an operator to manage and maintain message services.

Although the technical scheme of the present invention has been described through exemplary embodiments, the invention is not limited to such embodiments. It is apparent that those skilled in the art can make various modifications and variations to the present invention without departing from the spirit and scope of the invention. The present invention is intended to cover the modifications and variations provided that they fall in the scope of protection defined by the claims or their equivalents.

## Claims

1. A system for implementing message services, comprising a configuration information storage unit, a service access unit and a core processing unit, wherein:
a configuration information storage unit, adapted to store access configuration information of information providers that provide different message services, and store routing configuration information for message forwarding; a service access unit is adapted to determine whether to allow the information providers of different message services to access the system according to the access configuration information stored in the configuration information storage unit, forward messages exchanged between users and the information providers that are allowed to access the system to a core processing unit, and forward messages, which are forwarded by the core processing unit and whose receiver information is identified, to corresponding users or information providers; and
the core processing unit, adapted to identify receiver information of messages from the service access unit according to the routing configuration information stored in the configuration information storage unit, and forward messages whose receiver information is identified to the service access unit.

2. The system of claim 1, wherein the core processing unit comprises:
a receiving subunit, adapted to receive messages sent from the service access unit;
a receiver identifying subunit, adapted to identify receiver information of messages received by the receiving unit according to routing configuration information stored in the configuration information storage unit; and
a forwarding subunit, adapted to forward messages whose receiver information is identified by the receiver identifying subunit to the service access unit.

3. The system of claim 2, wherein the core processing unit further comprises a cache subunit, adapted to cache messages the forwarding subunit fails to forward; and the forwarding subunit extracts messages cached in the cache subunit and re-forwards the messages to the service access unit.

4. The system of claim 2, wherein the configuration information storage unit further stores control configuration information for authentication and detection of service messages; and
the core processing unit further comprises an authentication and detection subunit, adapted to perform authentication and detection on messages received by the receiving subunit according to the control configuration information stored in the configuration information storage unit.

5. The system of claim 2, wherein the configuration information storage unit further stores validity check configuration information for validity check of service messages;
the system further comprises a service management unit, adapted to process validity check of service messages according to the validity check configuration information stored in the configuration information storage unit; and
the core processing unit further comprises a validity check notifying subunit, adapted to notify the service management system to check validity of a message received by the receiving subunit and receive check result information returned by the service management unit.

6. The system of claim 5, wherein the validity check notifying subunit notifies the service management unit to check validity of a received message by forwarding the message received by the receiving subunit to the service management unit.

7. The system of claim 5, wherein the validity check notifying subunit notifies the service management unit to check validity of a message received by the receiving subunit based on related received information by forwarding related information in the message received by the receiving subunit to the service management unit.

8. The system of claim 1, wherein the service access unit comprises:
a short message access subunit, adapted to (1) determine whether to allow information providers that provide the short message service to access the system according to access configuration information stored in the configuration information storage unit, (2) forward short messages exchanged between users and information providers that are allowed to access the system to the core processing unit, and (3) forward short messages forwarded by the core processing unit whose receiver information is identified to appropriate users and information providers;
a multimedia message access subunit, adapted to (1) determine whether to allow information providers that provide multimedia message service to access the system according to access configuration information stored in the configuration information storage unit, (2) forward multimedia messages exchanged between users and information providers that are allowed to access the system to the core processing unit, and (3) forward multimedia messages forwarded by the core processing unit whose receiver information is identified to appropriate users and information providers; and
an unstructured supplementary service data (USSD) access subunit, adapted to (1) determine whether to allow information providers that provide USSD service to access the system according to access configuration information stored in the configuration information storage unit, (2) forward USSD messages exchanged between users and information providers that are allowed to access the system to the core processing unit, and (3) forward USSD messages forwarded by the core processing unit whose receiver information is identified to appropriate users and information providers.

9. The system of claim 5, wherein the service management unit comprises:
a subscription relation management subunit, adapted to perform subscription relation authentication on messages received by the receiving subunit according to subscription relation configuration information in the validity check configuration information stored in the configuration information storage unit and return authentication result information to the validity check notifying subunit.

10. The system of claim 5, wherein the service management unit comprises:
a demand relation management subunit, adapted to perform demand relation authentication on messages received by the receiving subunit according to demand relation configuration information in the validity check configuration information stored in the configuration information storage unit and return authentication result information to the validity check notifying subunit.

11. The system of claim 5, wherein the service management unit comprises:
a blacklist/whitelist management subunit, adapted to perform message sending right and/or receiving right authentication on messages received by the receiving subunit according to blacklist/whitelist configuration information in the validity check configuration information stored in the configuration information storage unit and return authentication result information to the validity check notifying subunit.

12. The system of claim 1, further comprising a system configuration management unit, adapted to receive different types of configuration information entered by external sources, store the received configuration information to the configuration information storage unit, and modify configuration information already stored in the configuration information storage unit based on updated configuration information entered by external sources.

13. A method for implementing message services, comprising:
determining whether to allow information providers that provide different message services to access the system according to stored access configuration information related to information providers that provide different message services;
identifying receiver information of messages exchanged between users and information providers that are allowed to access the system according to stored routing configuration information related to different message services; and
forwarding messages whose receiver information isidentified, to corresponding users or information providers.

14. The method of claim 13, further comprising:
performing authentication and detection on messages exchanged between users and information providers that are allowed to access the system according to stored control configuration information for authentication and detection of different messages.

15. The method of claim 13, further comprising:
checking validity of messages exchanged between users and information providers that are allowed to access according to stored validity check configuration information for validity check of different messages.

16. The system of claim 15, wherein the validity check configuration information comprises subscription relation configuration information, and subscription relation authentication is performed on messages exchanged between users and information providers that are allowed to access the system according to stored subscription relation configuration information.

17. The system of claim 15, wherein the validity check configuration information comprises demand relation configuration information, and demand relation authentication is performed on messages exchanged between users and information providers that are allowed to access the system according to stored demand relation configuration information.

18. The system of claim 15, wherein the validity check configuration information comprises blacklist/whitelist configuration information, and message sending right and/or receiving right authentication is performed on messages exchanged between users and information providers that are allowed to access the system according to stored blacklist/whitelist configuration information.
